# FASCICULE DE BREVET EUROPEEN

(11) **EP 0 920 713 B1**
(45) Date de publication et mention de la délivrance du brevet: **03.04.2002**
(21) Numéro de dépôt: 97937644.9
(22) Date de dépôt: 20.08.1997
(51) Int. Cl.: H01R 4/24

(54) **Panneau sandwich à âmes conductrices à haute résilience**
Hochelastische Mehrschichttafel mit leitenden Schichten
Hightly resilient sandwich construction with conductive cores

(30) Priorité: 21.08.1996 FR 9610454
(43) Date de publication de la demande: 09.06.1999
(73) Titulaire: Jolly, André Jean, 75003 Paris (FR)
(72) Inventeur: Jolly, André Jean, 75003 Paris (FR)
(74) Mandataire: Thébault, Jean-Louis
(86) Numéro de dépôt international: FR9701508
(87) Numéro de publication internationale: WO9808271

(56) Documents cités:
- WO-A-88/09984
- WO-A-94/03947
- BE-A- 571 881
- DE-A- 3 728 117
- FR-A- 2 694 322
- US-A- 3 383 641

## Description

La présente invention concerne les panneaux à âmes conductrices disposées entre des couches de matériaux électriquement isolants.

On connaît des panneaux à âmes conductrices qui sont utilisées par exemple pour alimenter des lampes piquées dans ces panneaux. Ces panneaux comprennent deux couches de matériau conducteur, généralement une feuille métallique et trois couches de matériau isolant afin de prendre en sandwich les couches conductrices. Les éléments qui sont piqués dans ces panneaux comprennent, soit une monobroche avec deux zones de contact à deux hauteurs différentes correspondant à la profondeur des couches conductrices lorsque l'élément est piqué jusqu'à la garde, soit deux broches indépendantes avec chacune une zone de contact à la hauteur adéquate.

Une application concerne les mises en service de stands dans les expositions.

Dans ce cas en effet, les installateurs doivent mettre en valeur des produits au moyen d'éclairages dirigés et ceci à partir de points d'alimentation électrique en nombre réduit. Les panneaux à âmes conductrices ne nécessitent qu'une alimentation pour toute une surface voire plusieurs surfaces mises en série ou en parallèle.

De tels panneaux présentent de nombreux autres avantages parmi lesquels la facilité de changement de position de l'un des points lumineux ou de tout autre composant électrique, la modification du type de l'un de ces composants ou encore l'ajout ou le retrait de l'un de ces composants.

On sait aussi que de tels panneaux peuvent être recouverts de revêtements de différentes natures et de différentes couleurs pour mettre en harmonie ces panneaux avec l'environnement.

Un autre atout de tels panneaux est leur légèreté qui les rend maniable et qui autorise une grande liberté dans les agencements.

Ces panneaux peuvent aussi être découpés et mis en forme, laissant ainsi libre cours à la créativité.

Le présent déposant a proposé aussi des cadres conducteurs permettant d'associer de tels panneaux en série en les rendant autoporteur.

On connaît de nombreux procédés de fabrication de tels panneaux, divulgués dans la demande de brevet WO 94/03947.

Après de nombreuses recherches, la présente invention propose un panneau obtenu qui pallie les inconvénients ci-après

En effet, si les panneaux actuellement fabriqués fonctionnent et donnent parfaitement satisfaction, il subsiste quelques imperfections sur le long terme concernant l'aspect contact.

Au cours du temps, un élément, par exemple monobroche, piqué dans un panneau au moyen de sa broche, s'éteint. Il suffit de le repositionner immédiatement à côté pour qu'il fonctionne à nouveau. On note que la broche sert à la fois de contact et de conducteur mais aussi de support mécanique de l'élément auquel elle est raccordée.

On a noté plus particulièrement que les broches à section circulaire pleine peuvent tourner dans le panneau ce qui, dès l'introduction, élargit le trou de pénétration tout en autorisant l'air à pénétrer si bien qu'au droit du contact avec la broche, le passage du courant fait que l'aluminium s'oxyde en formant un aluminate qui est un isolant. Ceci est facilité par le fait que la broche est bien souvent touchée avec les doigts, apportant ainsi de l'humidité supplémentaire qui accélère le processus d'oxydation.

Il est donc intéressant de pouvoir améliorer la pression du panneau dans le plan horizontal pour limiter la pénétration d'air.
L'invention propose un panneau qui pallie le problème de la dégradation de la qualité de contact au cours du temps, ceci au moyen de caractéristiques susceptibles d'être mises en fabrication industriellement.

On pense aussi que lorsque le contact initial est de mauvaise qualité, il se produit un échauffement qui, dans de la mousse isolante thermiquement conduit à une accumulation de calories, ce qui dégrade la mousse et dégrade simultanément la qualité du contact et ainsi de suite jusqu'à ce que le contact électrique cesse par perte de pression de contact.

On connaît également la demande internationale WO-A-88/09984 qui décrit un panneau avec une mousse de polyuréthane formant isolant et des feuilles d'aluminium comme éléments conducteurs.

Le brevet US-A-3.383.641 correspond au préambule de la revendication principale et illustre l'art antérieur.

A cet effet, l'invention propose un panneau sandwich à âmes conductrices interposées entre des couches de matériau isolant en mousse, notamment de polyuréthanne, supportant des éléments munis d'au moins une broche de connexion aux dites âmes, notamment des lampes alimentées en énergie électrique par ces âmes reliées à une source de courant qui se caractérise en ce que :
. le matériau isolant en mousse a un seuil d'élasticité au moins égal à la pression maximale exercée par l'une des broches d'un élément piqué dans ladite mousse ;
. au moins une feuille de matériau ayant des capacités de rappel élastique est interposée entre la mousse isolante et chaque âme conductrice, au moins après l'âme dans le sens d'introduction de la broche de l'élément, ladite feuille étant intégrée à et venue de fabrication avec la mousse isolante.

Plus particulièrement la feuille de matériau ayant des capacités de rappel élastique est interposée entre la mousse isolante et chaque face de chaque âme conductrice.

Selon un autre mode de réalisation, la feuille de matériau ayant des capacités élastiques de rappel, intégrée à et venue de fabrication avec la mousse isolante, est une couche de billes d'élastomères noyées dans la couche supérieure de la mousse isolante, en vis à vis de la feuille conductrice.

Une variante pratique consiste à utiliser en tant que feuille de matériau ayant des capacités de rappel élastique, la couche de colle servant à solidariser l'âme conductrice et la mousse.

Le panneau prévoit aussi une couche conductrice multifeuilles de matériau ayant des capacités élastiques de rappel et de matériau conducteur.

Dans un autre cas, on prévoit de recourir à une mousse chargée, conductrice ou une couche conductrice simple ou multifeuilles, en matériau élastomère conducteur.

La présente invention est décrite ci-après selon un mode de réalisation particulier, non limitatif, en regard des dessins annexés sur lesquels les figures représentent :
- figure 1, une vue d'une coupe d'un premier mode de réalisation d'un panneau à haute résilience,
- figure 2, une vue de détail de la pénétration d'une broche dans le panneau de la figure 1,
- figure 3, une vue d'une première variante de réalisation d'un panneau selon l'invention,
- figure 4, une demi-vue de détail de la pénétration d'une broche dans le panneau de la figure 3,
- figure 5, une vue d'une deuxième variante de réalisation d'un panneau sandwich selon l'invention, et
- figure 6, une vue d'une troisième variante de réalisation d'un panneau sandwich selon l'invention.

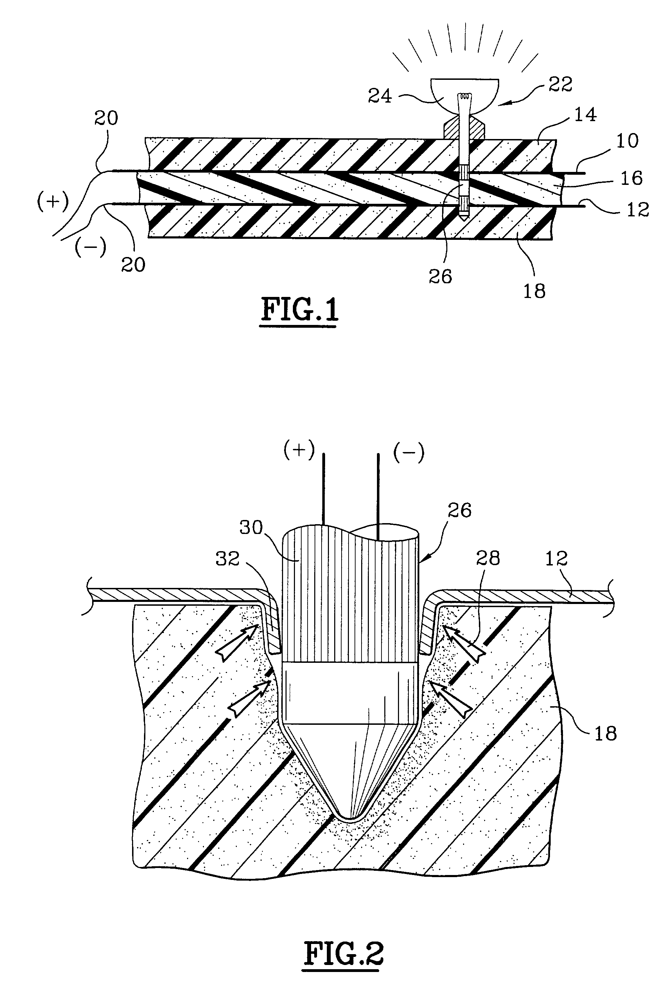

Sur la figure 1, on a représenté un panneau sandwich avec des couches conductrices 10, 12 interposées chacune entre deux des trois couches isolantes 14, 16 et 18.

On a symbolisé la liaison avec le réseau électrique par un fil double 20 sachant que de façon générale il s'agit de Très Basse Tension Sécurité, TBTS, notamment 12 ou 24 V.

Un élément 22, du type monobroche pour simplifier le dessin, est piqué dans le panneau. Cet élément est une lampe 24 avec une broche 26 de section circulaire. Comme l'élément 22 doit pouvoir être retiré sans laisser subsister de traces significatives, on comprend que le diamètre soit réduit.

Dans le mode de réalisation représenté, les paramètres qui caractérisent le matériau isolant sont importants.

En effet, pour permettre une installation au sein d'expositions ou de lieux publics en général, il faut que le panneau soit compatible avec les normes en vigueur, c'est-à-dire par exemple résistant au test dit du fil incandescent et/ou résistant aux tests de la classe M1, ce qui indique une certaine résistance au feu et un dégagement de produits non toxiques.

Aussi, les panneaux sont fabriqués à partir de mousses adaptées en l'occurrence du polyuréthanne.

Plus particulièrement, les mousses ont généralement une densité de 80 à 100 kg/m³ et surtout, afin d'obtenir les résultats recherchés, ces mousses ont par exemple :
- un seuil d'élasticité de 3 bars, c'est à dire qu'un pain de mousse soumis en surface à une pression de 3 bars reste dans la limite élastique et ne présente aucun marquage résiduel, et
- une résistance à la compression de 7 bars, c'est à dire que ce même pain de mousse, soumis à une pression de 7 bars, présente une déformation plastique résiduelle de 10% de la déformation engendrée par cette pression.

De tels paramètres confèrent aux panneaux sandwich ainsi réalisés des qualités de contact durables.

En effet, après la pénétration de la broche, la mousse a tendance à rappeler la feuille métallique dans le sens de la flèche 28, dans le sens opposé à celui de la pénétration et à plaquer cette feuille métallique contre la broche.

Dans le cas de l'art antérieur, la mousse n'ayant pas ces caractéristiques, la broche par son propre poids, venait à écraser la mousse avec une déformation plastique, tout en plaquant la feuille métallique sur ces bords déformés plastiquement et cet effet de rappel élastique étant absent, simplement par le jeu des dilatations différentielles des divers matériaux, l'une des parties conductrices arrivait à ne plus disposer d'une surface de contact suffisante ou d'une pression de contact suffisante pour faire passer la quantité de courant nécessaire pour l'allumage de l'élément.

Il faut donc que la mousse ait un seuil d'élasticité supérieur à la pression maximale exercée par la broche de l'élément qu'elle supporte sur la mousse à cet endroit.

Sur la figure 2, on a représenté en détail l'extrémité de la broche 22 avec la partie conductrice 30. La feuille de matière conductrice 12 est perforée par la broche 26, ce qui rabat les morceaux 32 périphériques de feuille dans le sens de l'introduction, entre la mousse 18 et le corps de la broche 26.

Il faut que la mousse exerce une pression, dans le sens horizontal, sur les morceaux 32 de feuille pour les plaquer contre la partie conductrice, ainsi que montré par les flèches 28.

La mousse doit présenter de faibles taux de compression dans le sens horizontal, au moins à proximité immédiate de la couche conductrice.

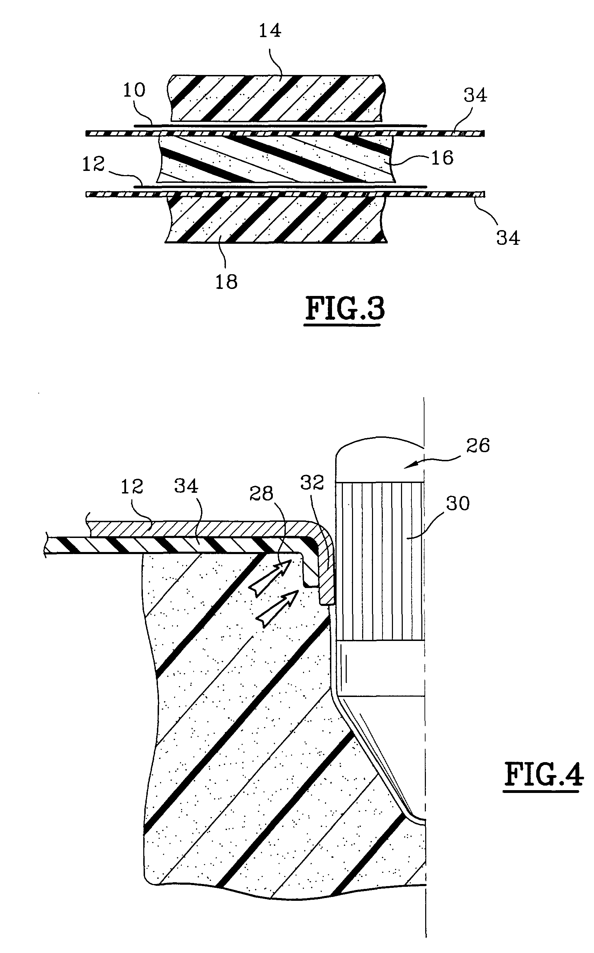

Selon un mode de réalisation particulier selon l'invention montré sur la figure 3, il est prévu d'interposer, entre les feuilles conductrices et la mousse d'un panneau conducteur, une feuille 34 d'un matériau ayant des propriétés de rappel élastique tel qu'un élastomère, sous la feuille conductrice, dans le sens de l'introduction.

Sur la figure 4, on peut constater le résultat obtenu, à savoir un effort exercé sur la feuille conductrice pour la plaquer contre la partie conductrice du corps de la broche 26.

En effet, le bord périphérique du trou de la feuille en élastomère laissé par la pénétration de la broche agit comme un bracelet élastique et contraint les morceaux 32 de la feuille métallique conductrice à se plaquer contre le corps de la broche.

Le contact est de bonne qualité car la pression exercée est importante et ceci, simultanément, sur une surface suffisante.

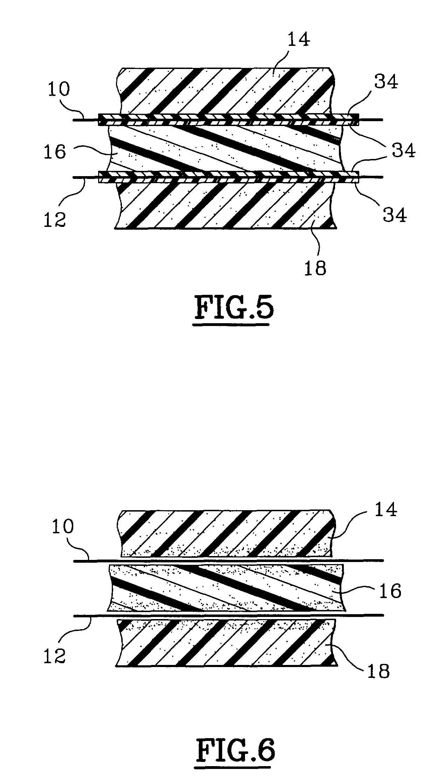

Afin de réaliser un panneau parfaitement réversible, il est possible de réaliser une même couche conductrice multifeuilles comme montré sur la figure 5, dans son mode de réalisation le plus simple.

Dans un mode de réalisation plus élaboré, on dispose alternativement, une feuille métallique conductrice, une couche d'élastomère, une feuille métallique, une couche d'élastomère, une feuille métallique. Les épaisseurs doivent être adaptées pour que l'épaisseur de cette couche conductrice ait une épaisseur raisonnable, notamment pour rester aisée à percer.

Avec un tel agencement, on augmente la surface de contact avec la même pression de contact horizontal.

Cette feuille 34 est intégrée à la surface de la couche isolante, en regard de la feuille conductrice, par exemple en intégrant lors de la fabrication de la couche de mousse isolante, des billes d'élastomère, au moins en surface de cette couche, en vis-à-vis de la couche conductrice. Une coupe schématique de ce mode de réalisation est représentée sur la figure 6.

Cette feuille 34, en matériau doté de capacités de rappel élastique, peut être la couche de colle elle-même qui est généralement utilisée pour solidariser les différentes couches du panneau sandwich, dispensée en épaisseur suffisante, en combinaison avec des feuilles métalliques conductrices.

Les feuilles métalliques peuvent être supprimées par utilisation de colles conductrices. Dans ce cas, la colle assure à la fois l'effet de rappel élastique et la conduction électrique.

On peut aussi recourir à des élastomères conducteurs.

Dans tous les exemples précités, on remarque l'effet d'étanchéité généré par le matériau élastomère par une résistance marquée à la compression horizontale, ce qui limite considérablement la pénétration d'air et les risques d'oxydation.

De ce fait on a aussi la possibilité de prévoir un élastomère qui se dilate en température car, au droit de la zone de contact, la très légère dissipation de chaleur peut être suffisante pour provoquer l'expansion de l'élastomère et assurer ainsi une étanchéité améliorée avec une pression de contact augmentée.

En variante, on peut recourir à des charges dotées de capacité de dilatation volumique noyées dans l'élastomère et/ou dans la mousse.

Dans certaines variantes décrites ci-avant, on a remarqué que la liaison très intime entre la feuille conductrice et l'élastomère permet de bien entraîner la feuille conductrice dans le cône de pénétration, simultanément à la feuille d'élastomère, ce qui améliore encore les qualités et la durabilité de la liaison électrique.

On a réalisé des panneaux qui donnent entière satisfaction avec les paramètres suivants : de la mousse polyuréthane ou polystyrène comme couche isolante et une couche conductrice comprenant un sandwich d'une feuille d'aluminium, 5 à 100 µm, une feuille de polyéthylène ou de polyamide de 50 à 500 µm et une feuille d'aluminium, 5 à 100 µm. Cette combinaison est répétée en fonction du nombre recherché de couches.

On peut aussi réaliser des panneaux ayant de nombreuses couches superposées pour aménager différents réseaux indépendants.

## Revendications

1. Panneau sandwich à âmes (10,12) conductrices interposées entre des couches (14,16,18) de matériau isolant en mousse, notamment de polyuréthanne, supportant des éléments (22) munis d'au moins une broche (26) de connexion aux dites âmes, notamment des lampes (24) alimentées en énergie électrique par ces âmes reliées à une source de courant, **caractérisé en ce que** :
. le matériau isolant en mousse a un seuil d'élasticité au moins égal à la pression maximale exercée par l'une des broches d'un élément (22) piqué dans ladite mousse.
. au moins une feuille (34) de matériau ayant des capacités de rappel élastique est interposée entre la mousse isolante et chaque âme conductrice, au moins après l'âme dans le sens d'introduction de la broche de l'élément, ladite feuille étant intégrée à et venue de fabrication avec la mousse isolante.

2. Panneau selon la revendication 1, **caractérisé en ce qu'**une feuille de matériau ayant des capacités élastiques de rappel est interposée entre la mousse isolante et chaque face de chaque âme conductrice.

3. Panneau selon la revendication 1 ou 2, **caractérisé en ce que** la feuille (34) de matériau ayant des capacités élastiques de rappel, intégrée à et venue de fabrication avec la mousse isolante, est une couche de billes d'élastomère noyées dans la couche supérieure de la mousse isolante, en vis-à-vis de la feuille conductrice.

4. Panneau selon la revendication 1, 2 ou 3, **caractérisé en ce que** la feuille (34) de matériau ayant des capacités de rappel élastique est une couche de colle servant à solidariser l'âme conductrice et la mousse.

5. Panneau selon l'une quelconque des revendications 1 à 4, **caractérisé en ce que** la couche conductrice comprend un ensemble multifeuilles de matériau ayant des capacités élastiques de rappel et de matériau conducteur.

6. Panneau selon l'une quelconque des revendications 1 à 5, **caractérisé en ce que** la couche conductrice (10, 12) est une mousse chargée, conductrice.

7. Panneau selon l'une quelconque des revendications 1 à 6, **caractérisé en ce que** la couche de matériau ayant des capacités élastiques de rappel et/ou la couche de matériau isolant comprend des charges de matériau ayant des capacités de dilatation tridimensionnelle sous l'effet d'une augmentation de la température.

## Claims

1. Sandwich panel with conductive cores (10, 12) interposed between layers (14, 16, 18) of insulating material made from foam, notably polyurethane, supporting elements (22) provided with at least one pin (26) for connection to said cores, notably lamps (24) supplied with electrical energy by these cores connected to a current source, **characterised in that**:
the foam insulating material has a threshold of elasticity at least equal to the maximum pressure exerted by one of the pins of an element (22) stuck in said foam;
at least one sheet (34) of material having elastic return capabilities is interposed between the insulating foam and each conductive core, at least after the core in the direction of insertion of the pin of the element, said sheet being integrated into and manufactured along with the insulating foam.

2. Panel according to Claim 1, **characterised in that** a sheet of material having elastic return capabilities is interposed between the insulating foam and each face of each conductive core.

3. Panel according to Claim 1 or 2, **characterised in that** the sheet (34) of material with elastic return capabilities, integrated into and manufactured along with the insulating foam, is a layer of elastomer balls embedded in the top layer of the insulating foam, and opposite the conductive sheet.

4. Panel according to Claim 1, 2 or 3, **characterised in that** the sheet (34) of material with elastic return capabilities is a layer of glue serving to fix together the conductive core and the foam.

5. Panel according to any one of Claims 1 to 4, **characterised in that** the conductive layer comprises a multi-sheet assembly of material having elastic return capabilities and of conductive material.

6. Panel according to any one of Claims 1 to 5, **characterised in that** the conductive layer (10, 12) is a conductive foam with a filler.

7. Panel according to any one of Claims 1 to 6, **characterised in that** the layer of material with elastic return capabilities and/or the layer of insulating material comprises fillers of material having three-dimensional expansion capabilities under the effect of an increase in temperature.

## Patentansprüche

1. Verbundplatte mit leitenden Seelen (10, 12), die zwischen Schichten (14, 16, 18) aus isolierendem Schaumstoff, insbesondere Polyurethan, eingefügt sind und Elemente (22) tragen, die mit wenigstens einem Stift (26) für die Verbindung mit den Seelen versehen sind, insbesondere Lampen (24), die über diese mit einer Stromquelle verbundenen Seelen mit elektrischer Energie versorgt werden, **dadurch gekennzeichnet, daß**:
- der isolierende Schaumstoff einen Elastizitätswert besitzt, der wenigstens gleich dem Maximaldruck ist, der durch einen der Stifte eines in den Schaumstoff gestochenen Elements (22) ausgeübt wird,
- wenigstens eine Folie (34) aus einem Werkstoff mit elastischem Rückstellvermögen zwischen den isolierenden Schaumstoff und jede leitende Seele wenigstens hinter der Seele in Einführungsrichtung des Elementstifts eingefügt ist, wobei die Folie in den isolierenden Schaumstoff integriert ist und zusammen mit ihm hergestellt ist.

2. Platte nach Anspruch 1, **dadurch gekennzeichnet, daß** eine Folie aus einem ein elastisches Rückstellvermögen besitzenden Werkstoff zwischen den isolierenden Schaumstoff und jede Seite jeder leitenden Seele eingefügt ist.

3. Platte nach Anspruch 1 oder 2, **dadurch gekennzeichnet, daß** die Folie (34) aus einem ein elastisches Rückstellvermögen besitzenden Werkstoff, die in den isolierenden Schaumstoff integriert ist und zusammen mit ihm hergestellt ist, eine Schicht aus Elastomerkugeln ist, die in die obere Schicht des isolierenden Schaumstoffs gegenüber der leitenden Folie versenkt sind.

4. Platte nach Anspruch 1, 2 oder 3, **dadurch gekennzeichnet, daß** die Folie (34) aus einem ein elastisches Rückstellvermögen besitzenden Werkstoff eine Klebeschicht ist, die dazu dient, die leitende Seele und den Schaumstoff aneinander zu befestigen.

5. Platte nach einem der Ansprüche 1 bis 4, **dadurch gekennzeichnet, daß** die leitende Schicht eine Gesamtheit aus mehreren Folien aus einem Werkstoff mit elastischem Rückstellvermögen und aus einem leitenden Werkstoff umfaßt.

6. Platte nach einem der Ansprüche 1 bis 5, **dadurch gekennzeichnet, daß** die leitende Schicht (10, 12) eingefüllter, leitender Schaumstoff ist.

7. Platte nach einem der Ansprüche 1 bis 6, **dadurch gekennzeichnet, daß** die Schicht aus einem ein elastisches Rückstellvermögen besitzenden Werkstoff und/oder die Schicht aus einem isolierenden Werkstoff Füllungen aus einem Werkstoff umfaßt, der die Fähigkeit hat, unter der Wirkung einer Temperaturerhöhung dreidimensional zu expandieren.
